# EUROPÄISCHE PATENTANMELDUNG

(11) **EP 2 789 583 A1**
(43) Veröffentlichungstag der Anmeldung: **15.10.2014**
(21) Anmeldenummer: 13163517.9
(22) Anmeldetag: 12.04.2013
(51) Int. Cl.: C01D 15/00, H01M 10/0561

(54) **Chloridarmer Elektrolyt**

(71) Anmelder: LANXESS Deutschland GmbH, 50569 Köln (DE)
(72) Erfinder: Boll, Matthias, 51061 Köln (DE); Kuckert, Eberhard, 51375 Leverkusen (DE); Linder, Thomas, 51067 Köln (DE)

(57) **Zusammenfassung**

Die vorliegende Erfindung betrifft ein Verfahren zur Herstellung von chloridarmem Lithiumhexafluorophosphat ausgehend von Lithiumfluorid und Phosphorpentafluorid und seine Verwendung in einem Elektrolyt.

## Beschreibung

Die vorliegende Erfindung betrifft ein Verfahren zur Herstellung von chloridarmem Lithiumhexafluorophosphat ausgehend von Lithiumfluorid und Phosphorpentafluorid und seine Verwendung in einem Elektrolyt.

Die Verbreitung von tragbaren elektronischen Geräten, wie z.B. Laptop und Palmtop-Computern, Mobiltelefonen oder Videokameras und damit auch der Bedarf nach leichten und leistungsfähigen Batterien und Akkumulatoren hat in den letzten Jahren weltweit dramatisch zugenommen. Hinzu kommt in Zukunft die Ausrüstung von Elektrofahrzeugen mit derartigen Akkumulatoren und Batterien.

Lithiumhexafluorophosphat (LiPF₆) hat insbesondere als Leitsalz in der Herstellung von leistungsfähigen Akkumulatoren eine hohe industrielle Bedeutung erlangt. Um die Funktionsfähigkeit und Lebensdauer und damit die Qualität solcher Akkumulatoren sicherzustellen, ist es von besonderer Wichtigkeit, dass die eingesetzten Lithiumverbindungen möglichst geringe Anteile an Chlorid enthalten. Chloridionen werden aufgrund von Korrosion für Zellenkurzschlüsse verantwortlich gemacht.

Aus dem Stand der Technik sind zahlreiche Verfahren zur Herstellung von Lithiumhexafluorophosphat bekannt. Beispielsweise bietet sich die Herstellung gemäß nachfolgendem Reaktionsschema an:

Stufe 1 PCl₃ + 3 HF → PF₃ + 3 HCl

Stufe 2 PF₃ + Cl₂ → PCl₂F₃

Stufe 3 PCl₂F₃ + 2 HF → PF₅ + 2 HCl

Stufe 4 PF₅ + LiF → LiPF₆

DE19712988A1 beschreibt ein batchweise betriebenes Verfahren ausgehend von Phosphortrichlorid (PCl₃). In einem Versuchsreaktor wurden Lithiumfluorid vorgelegt und bei 150°C unter Argon ausgeheizt. In einem Laborautoklaven wurde Phosphortrichlorid vorgelegt, dann Fluorwasserstoff und dann elementares Chlor zudosiert. Das resultierende Gasgemisch aus Chlorwasserstoff und Phosphorpentafluorid wurde über das Lithiumfluorid im Versuchsreaktor geleitet um Lithiumhexafluorophosphat zu erhalten.

JP11171518A2 beschreibt ein Verfahren zur Herstellung von Lithiumhexafluorophosphat, das ausgehend von Phosphortrichlorid und Fluorwasserstoff über Phosphortrifluorid verläuft, wobei letzteres mit elementarem Chlor zunächst zu Phosphordichloridtrifluorid, dieses wiederum mit Fluorwasserstoff zu Phosphorpentafluorid und letzteres schließlich mit Lithiumfluorid zu Lithiumhexafluorophosphat in einem organischen Lösungsmittel umgesetzt wird. Als organische Lösungsmittel werden Diethylether und Dimethylcarbonat eingesetzt. Zwar weist JP 11171518 A2 auf das Entstehen von toxischem HCl Gas hin, jedoch gibt es im Stand der Technik keine Hinweise auf den Chlorid-Gehalt im erhaltenen Lithiumhexafluorophosphat. Die Verfahrensführung lässt jedoch einen signifikanten Chlorid-Gehalt vermuten.

US3594402 beschreibt die Herstellung von verbesserten Lithiumhexafluorophosphat aus Tetraacetonitrillithiumhexafluorophosphat durch Reaktion von Lithiumfluorid und Phosphorpentafluorid mit überschüssigem Acetonitril. Die Entfernung des überschüssigen Acetonitrils erfolgt unter Vakuum.

Es ist des Weiteren beispielsweise aus US5378445 ein Verfahren zur Herstellung von Lösungen von Lithiumhexafluorophosphat bekannt, umfassend die Umsetzung eines Lithiumsalzes, unter basischen Bedingungen, mit einem Salz, das aus Natrium, Kalium, Ammonium oder einem Organo-Ammoniumhexafluorophosphat Salz in einem niedrig siedenden, nicht-protischen organischen Lösungsmittel. Dabei wird eine Lösung, enthaltend Lithiumhexafluorophosphat und ein gefälltes Natrium, Kalium, Ammonium oder Organo-Ammoniumsalz, enthaltend das Anion des Lithiumsalz-Reaktionspartners, erhalten.

In DE2026110 ist ein Verfahren zur Herstellung von Hexafluorophosphatsalzen von Lithiumtetraacetonitril beschrieben, dadurch gekennzeichnet, dass ein stöchiometrischer Überschuss an Acetonitril mit Hexafluorophosphatsalzen des Lithiums bei einer Temperatur von etwa -40°C bis etwa 80°C umgesetzt wird. Die Entfernung des Acetonitrils erfolgt bei Unterdruck.

In J. Liu, X. Li, Z. Wang, H. Guo, W. Peng, Y. Zhang, Q. Hu, Trans. Nonferrous Met. Soc. China 2010, 20, 344-348, wird eine Herstellungsmethode für Lithiumhexafluorophosphat beschrieben. Zunächst wird Phosphorpentafluorid aus Calciumfluorid und Phosphorpentoxid hergestellt. Lithiumhexafluorophosphat wurde synthetisiert in einer Acetonitril-Lösung durch die Reaktion von Lithiumfluorid mit Phosphorpentafluorid bei Raumtemperatur. Die Reinheit des hergestellten Lithiumhexafluorophosphats lag bei 99,98%.

Der Stand der Technik zeigt, dass es technisch sehr aufwändig ist, hohe Reinheiten für Lithiumhexafluorophosphat zu erzielen und insbesondere Gehalt an Chlorid niedrig zu halten. Mit den bislang bekannten Verfahren zur Herstellung von Lithiumhexafluorophosphat kann folglich nicht jedes Reinheitserfordernis erfüllt werden.

Demgemäß lag eine Aufgabe der vorliegenden Erfindung darin in der Entwicklung eines effizienten Verfahrens zur Herstellung von chloridarmem Lithiumhexafluorophosphat.

Die Lösung der Aufgabe und Gegenstand der vorliegenden Erfindung ist nun ein Verfahren zur Herstellung von chloridarmem Lithiumhexafluorophosphat, umfassend zumindest die Schritte
a) Inkontaktbringen von Lithiumfluorid in einem ersten organischen Lösungsmittel enthaltend ein Nitril mit einem Gas enthaltend Phosphorpentafluorid und Chlorwasserstoff, wobei ein Reaktionsgemisch enthaltend Lithiumhexafluorophosphat, ein erstes organisches Lösungsmittel enthaltend ein Nitril und Chlorwasserstoff erhalten wird,
b) Inkontaktbringen des gemäß a) gebildeten Reaktionsgemischs mit weiterem organischen Lösungsmittel, das vom ersten organischen Lösungsmittel verschieden ist, wobei Lithiumhexafluorophosphat ausfällt und c) Abtrennen von ausgefallenem Lithiumhexafluorophosphat,

Es sei an dieser Stelle angemerkt, dass der Rahmen der Erfindung alle beliebigen und möglichen Kombinationen der oben stehenden und im Folgenden aufgeführten, allgemeinen oder in Vorzugsbereichen genannten Komponenten, Wertebereiche bzw. Verfahrensparameter umfasst.

In Schritt a) wird Lithiumfluorid in einem ersten organischen Lösungsmittel mit einem Gas enthaltend Phosphorpentafluorid und Chlorwasserstoff in Kontakt gebracht, wobei ein Reaktionsgemisch enthaltend Lithiumhexafluorophosphat, ein erstes organisches Lösungsmittel und Chlorwasserstoff erhalten wird.

Das in Schritt a) eingesetzte Lithiumfluorid besitzt beispielsweise einen Reinheitsgrad von 98,0000 bis 99,9999 Gew.-%, vorzugsweise 99,0000 bis 99,9999 Gew.-%, weiter bevorzugt 99,9000 bis 99,9995 Gew.-%, besonders bevorzugt 99,9500 bis 99,9995 Gew.-% und ganz besonders bevorzugt 99,9700 bis 99,9995 Gew.-% bezogen auf wasserfreies Produkt.

Das eingesetzte Lithiumfluorid besitzt weiterhin vorzugsweise an Fremdionen:
1) einen Gehalt von 0,1 bis 250 ppm, bevorzugt 0,1 bis 75 ppm, weiter bevorzugt 0,1 bis 50 und besonders bevorzugt 0,5 bis 10 ppm und ganz besonders bevorzugt 0,5 bis 5 ppm Natrium in ionischer Form,
2) einen Gehalt von 0,01 bis 200 ppm, bevorzugt 0,01 bis 10 ppm, weiter bevorzugt 0,5 bis 5 ppm und besonders bevorzugt 0,1 bis 1 ppm Kalium in ionischer Form,
3) einen Gehalt von 0,05 bis 500 ppm, bevorzugt 0,05 bis 300 ppm, weiter bevorzugt 0,1 bis 250 ppm und besonders bevorzugt 0,5 bis 100 ppm Calcium in ionischer Form und/oder
4) einen Gehalt von 0,05 bis 300 ppm, vorzugsweise 0,1 bis 250 ppm und besonders bevorzugt 0,5 bis 50 ppm Magnesium in ionischer Form.

Das eingesetzte Lithiumfluorid besitzt weiterhin beispielsweise an Fremdionen
i) einen Gehalt von 0,1 bis 1000 ppm, bevorzugt von 0,1 bis 100 ppm und besonders bevorzugt 0,5 bis 10 ppm Sulfat und/oder
ii) einen Gehalt von 0,1 bis 1000 ppm, vorzugsweise 0,5 bis 500 ppm Chlorid,
ebenfalls bezogen auf das wasserfreie Produkt und wobei gilt, dass die Summe von Lithiumfluorid und den vorgenannten Fremdionen 1,000,000 ppm bezogen auf das Gesamtgewicht des technischen Lithiumcarbonats bezogen auf das wasserfreie Produkt nicht überschreitet.

In einer Ausführungsform enthält das Lithiumfluorid einen Gehalt an Fremdmetallionen von insgesamt 1000 ppm oder weniger, vorzugsweise 300 ppm oder weniger, besonders bevorzugt 20 ppm oder weniger und ganz besonders bevorzugt 10 ppm oder weniger.

Die hierin gemachten ppm-Angaben beziehen sich, sofern nicht explizit anders angegeben, generell auf Gewichtsanteile, die Gehalte der genannten Kationen und Anionen werden durch Ionenchromatographie, gemäß Angaben im experimentellen Teil, ermittelt, sofern nicht anders angegeben.

Das Lithiumfluorid mit vorgenannten Spezifikationen kann beispielsweise nach einem Verfahren gewonnen werden, das zumindest folgende Schritte umfasst:
i) Bereitstellung eines wässrigen Mediums enthaltend gelöstes Lithiumcarbonat
ii) Umsetzung des gemäß a) bereitgestellten wässrigen Mediums mit gasförmigem Fluorwasserstoff zu einer wässrigen Suspension von festem Lithiumfluorid
iii) Abtrennung des festen Lithiumfluorid aus der wässrigen Suspension
iv) Trocknung des abgetrennten Lithiumfluorids.

Gemäß Schritt i) wird eine wässrige Lösung enthaltend Lithiumcarbonat bereitgestellt.

Unter dem Begriff "wässriges Medium enthaltend gelöstes Lithiumcarbonat" ist hier ein flüssiges Medium zu verstehen, das
i) gelöstes Lithiumcarbonat enthält, vorzugsweise in einer Menge von mindestens 2,0 g/l, besonders bevorzugt 5,0 g/l bis zur maximalen Löslichkeit im wässrigen Medium bei der gewählten Temperatur, ganz besonders bevorzugt 7,0 g/l bis zur maximalen Löslichkeit im wässrigen Medium bei der gewählten Temperatur. Insbesondere beträgt der Gehalt an Lithiumcarbonat 7,2 bis 15,4 g/l. Dem Fachmann ist bekannt, dass die Löslichkeit von Lithiumcarbonat in reinem Wasser bei 0°C 15,4 g/l bei 20°C 13,3 g/l, bei 60°C 10,1 g/l und bei 100°C 7,2 g/l beträgt und folglich gewisse Konzentrationen nur bei bestimmten Temperaturen erreicht werden können
ii) einen Gewichtsanteil von mindestens 50 % an Wasser, vorzugsweise 80 Gew.-%, besonders bevorzugt mindestens 90 Gew.-% bezogen auf das Gesamtgewicht des flüssigen Mediums enthält, und
iii) vorzugsweise auch feststofffrei ist oder einen Feststoffgehalt von mehr als 0,0 bis zu 0,5 Gew.-%, vorzugsweise feststofffrei ist oder einen Feststoffgehalt von mehr als 0,0 bis zu 0,1 Gew.-%, besonders bevorzugt feststofffrei ist oder einen Feststoffgehalt von mehr als 0,0 bis zu 0,005 Gew. und besonders bevorzugt feststofffrei ist,
wobei die Summe der Komponenten i), ii) und vorzugsweise iii) maximal 100 Gew.-%, vorzugsweise 98 bis 100 Gew.-% und besonders bevorzugt 99 bis 100 Gew.-% bezogen auf das Gesamtgewicht des wässrigen Mediums enthaltend gelöstes Lithiumcarbonat beträgt.

Das wässrige Medium enthaltend gelöstes Lithiumcarbonat kann in einer weiteren Ausführungsform der Erfindung als weitere Komponente
iv) zumindest ein mit Wasser mischbares organisches Lösungsmittel enthalten. Geeignete, mit Wasser mischbare organische Lösungsmittel sind beispielsweise ein- oder mehrwertige Alkohole wie Methanol, Ethanol, n-Propanol, Isopropanol, n-Butanol, Ethylengylcol, Ethylenglycolmonomethylether, Ethylenglycolmonoethylether, Propylenglycol, 1,3-Propandiol oder Glycerin, Ketone wie Aceton oder Ethylmethylketon.

Sofern das wässrige Medium enthaltend gelöstes Lithiumcarbonat zumindest ein mit Wasser mischbares organisches Lösungsmittel enthält, kann deren Anteil beispielsweise mehr als 0,0 Gew.-% bis 20 Gew.-% betragen, vorzugsweise 2 bis 10 Gew.-%, wobei dann jeweils gilt, dass die Summe der Komponenten i), ii), iii) und iv) maximal 100 Gew.-%, vorzugsweise 95 bis 100 Gew.-% und besonders bevorzugt 98 bis 100 Gew.-% bezogen auf das Gesamtgewicht des wässrigen Mediums enthaltend gelöstes Lithiumcarbonat beträgt.

Vorzugsweise ist das wässrige Medium enthaltend gelöstes Lithiumcarbonat jedoch frei von mit Wasser mischbaren organischen Lösungsmitteln.

Das wässrige Medium enthaltend gelöstes Lithiumcarbonat kann als weitere Komponente
v) einen Komplexbildner enthalten, vorzugsweise in einer Menge von 0,001 bis 1 Gew.-%, vorzugsweise 0,005 bis 0,2 Gew-% bezogen auf das Gesamtgewicht des wässrigen Mediums enthaltend gelöstes Lithiumcarbonat.

Komplexbildner sind vorzugsweise solche, deren Komplexe mit Calcium-Ionen und Magnesium-Ionen Komplexe bilden, die bei einem pH-Wert von 8 und 20°C eine Löslichkeit von mehr als 0,02 mol/l besitzen. Beispiele für geeignete Komplexbildner sind Ethylendiamintetraessigsäure (EDTA) und seine Alkalimetall- oder Ammoniumsalze, wobei Ethylendiamintetraessigsäure bevorzugt ist.

In einer Ausführungsform ist das wässrige Medium enthaltend gelöstes Lithiumcarbonat jedoch frei von Komplexbildnern.

Zur Bereitstellung der wässrigen Lösung enthaltend Lithiumcarbonat wird vorzugsweise so vorgegangen, dass festes Lithiumcarbonat mit einem lithiumcarbonatfreien oder lithiumcarbonatarmen wässrigen Medium in Kontakt gebracht wird, so dass das feste Lithiumcarbonat zumindest teilweise in Lösung geht. Unter einem Lithiumcarbonatarmen, wässrigen Medium wird ein wässriges Medium verstanden, das einen Gehalt an Lithiumcarbonat von bis zu 1,0 g/l, vorzugsweise bis zu 0,5 g/l Lithiumcarbonat aufweist aber nicht frei von Lithiumcarbonat ist.

Das zur Bereitstellung eingesetzte wässrige Medium erfüllt die Bedingungen die oben unter ii) und iii) genannt sind und weist optional die Komponenten iv) und v) auf.

Im einfachsten Fall ist das wässrige Medium Wasser, vorzugsweise Wasser mit einem spezifischen elektrischen Widerstand von 5 MΩ·cm bei 25°C oder mehr.

In einer bevorzugten Ausführungsform werden die Schritte i) bis iv) ein- oder mehrfach wiederholt. ein- oder mehrfach wiederholt. In diesem Fall wird bei der Wiederholung zur Bereitstellung des wässrigen Mediums enthaltend gelöstes Lithiumcarbonat als lithiumcarbonatfreies oder lithiumcarbonatarmes wässriges Medium das wässrige Medium eingesetzt, dass in einem vorangegangenen Schritt iii) bei der Abtrennung von festem Lithiumfluorid aus der wässrigen Suspension von Lithiumfluorid anfällt. In diesem Fall enthält das lithiumcarbonatfreie oder lithiumcarbonatarme wässrige Medium gelöstes Lithiumfluorid, typischerweise bis zur Sättigungsgrenze bei der jeweiligen Temperatur.

In einer Ausführungsform kann das Inkontaktbringen des lithiumcarbonatfreien oder - armen, wässrigen Mediums mit dem festen Lithiumcarbonat in einem Rührreaktor, einem Durchflussreaktor oder jeder anderen Apparatur erfolgen, die dem Fachmann für die Kontaktierung von flüssigen mit festen Stoffen bekannt ist. Vorzugsweise wird im Sinne einer kurzen Verweildauer und der Erzielung einer möglichst nah am Sättigungspunkt liegenden Konzentration an Lithiumcarbonat im eingesetzten wässrigen Medium ein Überschuss an Lithiumcarbonat eingesetzt, d.h. so viel, dass eine vollständige Auflösung des festen Lithiumcarbonats nicht erfolgen kann. Um in diesem Fall den Feststoffanteil gemäß ii) zu begrenzen erfolgt anschließend eine Filtration, Sedimentation, Zentrifugation oder ein anderes, beliebiges Verfahren, das dem Fachmann zur Abtrennung von Feststoffen aus oder von Flüssigkeit bekannt ist, wobei die Filtration bevorzugt ist.

Sofern die Verfahrensschritte i) bis iii) wiederholt und/oder kontinuierlich durchgeführt werden, ist eine Filtration durch einen Querstromfilter bevorzugt.

Die Temperatur beim Inkontaktbringen kann beispielsweise vom Gefrierpunkt bis zum Siedepunkt des eingesetzten wässrigen Mediums erfolgen, vorzugsweise 0 bis 100°C, besonders bevorzugt 10 bis 60°C und besonders bevorzugt 10 bis 35°C, insbesondere 16 bis 24°C.

Der Druck beim Inkontaktbringen kann beispielsweise 100 hPa bis 2 MPa betragen, 900 hPa bis 1200 hPa, insbesondere Umgebungsdruck ist besonders bevorzugt.

Unter technischem Lithiumcarbonat wird im Rahmen der Erfindung Lithiumcarbonat verstanden, das einen Reinheitsgrad von 95,0 bis 99,9 Gew.-% vorzugsweise 98,0 bis 99,8 Gew.-% und besonders bevorzugt 98,5 bis 99,8 Gew.-% bezogen auf wasserfreies Produkt besitzt.

Vorzugsweise enthält das technische Lithiumcarbonat weiterhin an Fremdionen, d.h. an Ionen, die nicht Lithium- oder Carbonat-Ionen sind
1) einen Gehalt von 200 bis 5000 ppm, vorzugsweise 300 bis 2000 und besonders bevorzugt 500 bis 1200 ppm Natrium in ionischer Form und/oder
2) einen Gehalt von 5 bis 1000 ppm, vorzugsweise 10 bis 600 ppm Kalium in ionischer Form und/oder
3) einen Gehalt von 50 bis 1000 ppm, vorzugsweise 100 bis 500 und besonders bevorzugt 100 bis 400 ppm Calcium in ionischer Form und/oder
4) einen Gehalt von 20 bis 500 ppm, vorzugsweise 20 bis 200 und besonders bevorzugt 50 bis 100 ppm Magnesium in ionischer Form.
5) einen Gehalt von 50 bis 1000 ppm, vorzugsweise 100 bis 800 ppm Sulfat und/oder
6) einen Gehalt von 10 bis 1000 ppm, vorzugsweise 100 bis 500 ppm Chlorid,
ebenfalls bezogen auf das wasserfreie Produkt.

Generell gilt, dass die Summe von Lithiumcarbonat und den vorgenannten Fremdionen 1) bis 4) sowie gegebenenfalls i) und ii) 1,000,000 ppm bezogen auf das Gesamtgewicht des technischen Lithiumcarbonats bezogen auf das wasserfreie Produkt nicht überschreitet.

In einer weiteren Ausführungsform weist das technische Lithiumcarbonat eine Reinheit von 98,5 bis 99,5 Gew.-% und einen Gehalt von 500 bis 2000 ppm an Fremdmetallionen d.h. Natrium, Kalium, Magnesium und Calcium auf.

In einer weiteren Ausführungsform weist das technische Lithiumcarbonat vorzugsweise zusätzlich einen Gehalt von 100 bis 800 ppm an Fremdanionen, d.h. Sulfat oder Chlorid bezogen auf das wasserfreie Produkt auf.

Die hierin gemachten ppm-Angaben beziehen sich, sofern nicht explizit anders angegeben, generell auf Gewichtsanteile, die Gehalte der genannten Kationen und Anionen werden durch Ionenchromatographie ermittelt, sofern nicht anders angegeben gemäß Angaben im experimentellen Teil.

In einer Ausführungsform des erfindungsgemäßen Verfahrens erfolgt die Bereitstellung des wässrigen Mediums enthaltend Lithiumcarbonat bzw. das Inkontaktbringen eines lithiumcarbonatfreien oder -armen, wässrigen Mediums mit festem Lithiumcarbonat batchweise oder kontinuierlich, wobei die kontinuierliche Durchführung bevorzugt ist.

Das gemäß Schritt i) bereitgestellte wässrige Medium enthaltend gelöstes Lithiumcarbonat weist typischerweise einen pH-Wert von 8,5 bis 12,0, vorzugsweise von 9,0 bis 11,5 gemessen oder berechnet auf 20°C und 1013 hPa auf.

Bevor das gemäß Schritt i) bereitgestellte wässrige Medium enthaltend gelöstes Lithiumcarbonat in Schritt iib) eingesetzt wird, kann es über einen Ionentauscher geleitet werden, um insbesondere Calcium- und Magnesiumionen zumindest teilweise zu entfernen. Dafür können beispielsweise schwach- als auch stark saure Kationenaustauscher eingesetzt werden. Für den Einsatz im erfindungsgemäßen Verfahren können die Ionenaustauscher in Vorrichtungen, wie beispielsweise Durchflusssäulen, die mit den oben beschriebenen Kationenaustauschern beispielsweise in Form von Pulvern, Perlen oder Granulaten befüllt sind, eingesetzt werden.

Besonders geeignet sind Ionentauscher enthaltend Copolymerisate von zumindest Styrol und Divinylbenzol, die weiterhin beispielsweise Aminoalkylenphosphonsäure-Gruppen oder Iminodiessigsäure-Gruppen enthalten.

Solche Ionentauscher sind beispielsweise solche des Typs Lewatit TM wie beispielsweise Lewatit TM OC 1060 (AMP-Typ), Lewatit TM TP 208 (IDA-Typ), Lewatit TM E 304/88, Lewatit TM S 108, Lewatit TP 207, Lewatit TM S 100; solche des Typs Amberlite TM, wie beispielsweise Amberlite TM IR 120, Amberlite TM IRA 743; solche des Typs Dowex TM, wie beispielsweise Dowex TM HCR; solche des Typs Duolite, wie beispielsweise Duolite TM C 20, Duolite TM C 467, Duolite TM FS 346; und solche des Typs Imac TM, wie beispielsweise Imac TM TMR, wobei Lewatit TM Typen bevorzugt sind.

Bevorzugt werden solche Ionentauscher eingesetzt, die möglichst natriumarm sind. Dazu ist es vorteilhaft, den Ionentauscher vor seinem Einsatz mit der Lösung eines Lithiumsalzes, vorzugsweise einer wässrigen Lösung von Lithiumcarbonat zu spülen.

In einer Ausführungsform des erfindungsgemäßen Verfahrens findet keine Behandlung mit Ionentauschern statt.

Gemäß Schritt ii) erfolgt die Umsetzung des gemäß Schritt i) bereitgestellten wässrigen Mediums enthaltend gelöstes Lithiumcarbonat mit gasförmigem Fluorwasserstoff zu einer wässrigen Suspension von festem Lithiumfluorid.

Die Umsetzung kann beispielsweise durch Einleiten oder Überleiten eines gasförmigen Fluorwasserstoff enthaltenen Gasstromes in oder über das wässrige Mediums enthaltend gelöstes Lithiumcarbonat erfolgen oder durch Versprühen, Vernebeln oder Durchfließen des wässrigen Mediums enthaltend gelöstes Lithiumcarbonat in oder durch ein Gas enthaltend gasförmigen Fluorwasserstoff.

Aufgrund der sehr starken Löslichkeit von gasförmigem Fluorwasserstoff in wässrigen Medien ist Überleiten, Versprühen, Vernebeln oder Durchfließen bevorzugt wobei Überleiten noch weiter bevorzugt ist.

Als gasförmigen Fluorwasserstoff enthaltenen Gasstrom oder Gas enthaltend gasförmigen Fluorwasserstoff kann entweder gasförmiger Fluorwasserstoff als solcher eingesetzt werden oder ein Gas enthaltend gasförmigen Fluorwasserstoff und ein Inertgas, wobei unter einem Inertgas ein Gas zu verstehen ist, dass unter den üblichen Reaktionsbedingungen nicht mit Lithiumfluorid reagiert. Beispiele sind Luft, Stickstoff, Argon und andere Edelgase oder Kohlendioxid, wobei Luft und noch mehr Stickstoff bevorzugt sind.

Der Anteil an Inertgas kann beliebig variieren und beispielsweise 0,01 bis 99 Vol.-% betragen, vorzugsweise 1 bis 20 Vol.-%.

Bei der Umsetzung gemäß Schritt ii) entsteht Lithiumfluorid, das aufgrund der Tatsache, dass es im wässrigen Medium schwerer löslich ist als Lithiumcarbonat, ausfällt und folglich eine wässrige Suspension von festem Lithiumfluorid bildet. Dem Fachmann ist bekannt, dass Lithiumfluorid eine Löslichkeit von etwa 2,7 g/l bei 20°C besitzt.

Die Umsetzung erfolgt vorzugsweise derart, dass die resultierende wässrigen Suspension von festem Lithiumfluorid einen pH-Wert von 3,5 bis 8,0, vorzugsweise 4,0 bis 7,5 und besonders bevorzugt 5,0 bis 7,2 erreicht. Bei den genannten pH-Werten wird Kohlendioxid freigesetzt. Um dessen Freisetzung aus der Suspension zu ermöglichen ist es vorteilhaft die Suspension beispielsweise zu Rühren oder über statische Mischelemente zu leiten.

Die Temperatur bei der Umsetzung gemäß Schritt ii) kann beispielsweise vom Gefrierpunkt bis zum Siedepunkt des eingesetzten wässrigen Mediums enthaltend gelöstes Lithiumcarbonat betragen, vorzugsweise 0 bis 65°C, besonders bevorzugt 15 bis 45°C und besonders bevorzugt 15 bis 35°C, insbesondere 16 bis 24°C.

Der Druck bei der Umsetzung gemäß Schritt ii) kann beispielsweise 100 hPa bis 2 MPa betragen, 900 hPa bis 1200 hPa, insbesondere Umgebungsdruck ist besonders bevorzugt.

Gemäß Schritt iii) erfolgt die Abtrennung des festen Lithiumfluorids aus der wässrigen Suspension.

Die Abtrennung erfolgt beispielsweise durch Filtration, Sedimentation, Zentrifugation oder ein anderes, beliebiges Verfahren, das dem Fachmann zur Abtrennung von Feststoffen aus oder von Flüssigkeiten bekannt ist, wobei die Filtration bevorzugt ist.

Sofern das Filtrat für Schritt i) wieder eingesetzt wird und die Verfahrensschritte a) bis c) wiederholt durchgeführt werden , ist eine Filtration durch einen Querstromfilter bevorzugt.

Das so erhaltene feste Lithiumfluorid besitzt typischerweise noch eine Restfeuchte von 1 bis 40 Gew.-%, bevorzugt 5 bis 30 Gew.-%.

Bevor das gemäß Schritt iii) abgetrennte Lithiumfluorid gemäß Schritt iv) getrocknet wird kann es mit Wasser oder einem Medium enthaltend Wasser und mit Wasser mischbare organische Lösungsmittel ein- oder mehrfach gewaschen werden. Wasser ist bevorzugt. Wasser mit einem elektrischen Widerstand von 15 MΩ·cm bei 25°C oder mehr ist besonders bevorzugt. Aus Schritt iii) am festen Lithiumfluorid anhaftendes Wasser mit Fremdionen wird dadurch weitestgehend entfernt.

Gemäß Schritt iv) wird das Lithiumfluorid getrocknet. Die Trocknung kann in jedem dem Fachmann zur Trocknung bekannten Apparatur durchgeführt werden. Vorzugsweise erfolgt die Trocknung durch Erhitzen des Lithiumfluorids, vorzugsweise auf 100 bis 800°C besonders bevorzugt 200 bis 500°C.

Als erstes organisches Lösungsmittel kann beispielsweise ein Nitril, eine Kombination aus Nitrilen oder eine Kombination aus zumindest einem Nitril mit zumindest einem organischen Lösungsmittel, das kein Nitril ist, verwendet werden.

Beispiele für geeignete Nitrile sind Acetonitril, Propannitril und Benzonitril. Insbesondere bevorzugt wird Acetonitril eingesetzt.

Beispielsweise beträgt das Molverhältnis von eingesetzten Nitrilen zur vorliegenden Menge an Lithiumionen im Reaktionsgemisch aus Schritt a) mindestens 1:1, bevorzugt mindestens 10:1 und besonders bevorzugt mindestens 50:1 und ganz besonders bevorzugt mindestens 100:1.

Sofern als erstes organisches Lösungsmittel solche eingesetzt werden, die kein Nitril sind, werden bevorzugt solche organischen Lösungsmittel eingesetzt, die bei Raumtemperatur flüssig sind und einen Siedepunkt von 300°C oder weniger bei 1013 hPa aufweisen und die weiterhin zumindest ein Sauerstoffatom oder ein Stickstoffatom oder beide enthalten.

Bevorzugte organische Lösungsmittel sind dabei solche, die keine Protonen aufweisen, die einen pKs-Wert bei 25°C bezogen auf Wasser oder ein wässriges Vergleichssystem von weniger als 20 aufweisen. Solche organischen Lösungsmittel werden in der Literatur auch als "aprotische" Lösungsmittel bezeichnet.

Beispiele für solche weiteren organischen Lösungsmittel sind bei Raumtemperatur flüssige Ester, organische Carbonate, Ketone, Ether, Säureamide oder Sulfone. Beispiele für Ether sind Diethylether, Diisopropylether, Methyl-tert.-butylether, Ethylenglycoldimethyl und -diethylether, 1,3-Propandioldimethyl und -diethylether, Dioxan und Tetrahydrofuran.

Beispiele für Ester sind Essigsäuremethyl- und -ethylester und Butylacetat oder organische Carbonate wie Dimethylcarbonat (DMC), Diethylcarbonat (DEC) oder Propylencarbonat (PC) oder Ethylencarbonat (EC).

Ein Beispiel für ein Sulfon ist Sulfolan.

Beispiele für Ketone sind Aceton, Methylethylketon und Acetophenon.

Beispiele für Säureamide sind N,N-Dimethylformamid, N,N-Dimethylacetamid, N-Methylformanilid, N-Methylpyrrolidon oder Hexamethylphosphorsäuretriamid.

Das erfindungsgemäße erste organische Lösungsmittel kann auch mehrere der genannten organischen Lösungsmitteln enthalten.

In einer alternativen Ausführungsform wird festes Lithiumfluorid und mit einem ersten organischen Lösungsmittel in Kontakt gebracht.

In einer weiteren alternativen Ausführungsform wird ein erstes organisches Lösungsmittel vorgelegt und festes Lithiumfluorid zugegeben.

Die dabei entstehende Suspension enthaltend Lithiumfluorid und ein erstes organisches Lösungsmittel wird mit Gas enthaltend Phosphorpentafluorid und Chlorwasserstoff in Kontakt gebracht.

In einer alternativen Ausführungsform erfolgt das Inkontaktbringen von Lithiumfluorid und ein erstes organisches Lösungsmittel unter Inertgas, bevorzugt unter Argon.

Das in Schritt a) eingesetzte Gas enthaltend Phosphorpentafluorid und Chlorwasserstoff kann dabei in an sich bekannter Weise durch ein Verfahren hergestellt werden, das zumindest die folgenden Schritte umfasst.
1) Umsetzung von Phosphortrichlorid mit Fluorwasserstoff zu Phosphortrifluorid und Chlorwasserstoff
2) Umsetzung von Phosphortrifluorid mit elementarem Chlor zu Phosphordichlorid-trifluorid
3) Umsetzung von Phosphordichloridtrifluorid mit Fluorwasserstoff zu Phosphorpentafluorid und Chlorwasserstoff

Als Gas enthaltend Phosphorpentafluorid und Chlorwasserstoff wird daher typischerweise ein Gasgemisch enthaltend 5 bis 41 Gew.-% Phosphorpentafluorid und 6 bis 59 Gew.-% Chlorwasserstoff, vorzugsweise 20 bis 41 Gew.-% Phosphorpentafluorid und 40 bis 59 Gew.-% Chlorwasserstoff, besonders bevorzugt 33 bis 41 Gew.-% Phosphorpentafluorid und 49 bis 59 Gew.-% Chlorwasserstoff eingesetzt werden, wobei der Anteil von Phosphorpentafluorid und Chlorwasserstoff beispielsweise 11 bis 100 Gew.-%, vorzugsweise 90 bis 100 Gew.-% und besonders bevorzugt 95 bis 100 Gew.-% beträgt.

Die Differenz zu 100 Gew.-%, sofern überhaupt vorhanden, können Chlor, Fluorwasserstoff oder Inertgase sein, wobei unter einem Inertgas hier ein Gas zu verstehen ist, das unter den üblichen Reaktionsbedingungen nicht mit Phosphorpentafluorid, Fluor- oder Chlorwasserstoff oder Lithiumfluorid reagiert. Beispiele sind Stickstoff, Argon und andere Edelgase oder Kohlendioxid, wobei Stickstoff bevorzugt ist.

Die Differenz zu 100 Gew.-%, sofern überhaupt vorhanden, kann alternativ oder ergänzend weiterhin Fluorwasserstoff sein.

Bezogen auf den Gesamtprozess über die Stufen 1) bis 3) wird Fluorwasserstoff beispielsweise in einer Menge von 4,5 bis 8 mol, vorzugsweise 4,8 bis 7,5 mol und besonders bevorzugt 4,8 bis 6,0 mol Fluorwasserstoff pro mol Phosphortrichlorid eingesetzt.

Typischerweise ist das Gas enthaltend Phosphorpentafluorid und Chlorwasserstoff daher ein Gasgemisch enthaltend 5 bis 41 Gew.-% Phosphorpentafluorid, 6 bis 59 Gew.-% Chlorwasserstoff und 0 bis 50 Gew.-% Fluorwasserstoff, vorzugsweise 20 bis 41 Gew.-% Phosphorpentafluorid, 40 bis 59 Gew.-% Chlorwasserstoff und 0 bis 40 Gew.-% Fluorwasserstoff, besonders bevorzugt 33 bis 41 Gew.-% Phosphorpentafluorid, 49 bis 59 Gew.-% Chlorwasserstoff und 0 bis 18 Gew.-% Fluorwasserstoff, wobei der Anteil von Phosphorpentafluorid, Chlorwasserstoff und Fluorwasserstoff beispielsweise 11 bis 100 Gew.-%, vorzugsweise 90 bis 100 Gew.-% und besonders bevorzugt 95 bis 100 Gew.-% beträgt.

In einer alternativen Ausführungsform ist die Bezeichnung Gas enthaltend Phosphorpentafluorid und Chlorwasserstoff in Schritt a) so zu verstehen, dass die Suspension enthaltend Lithiumfluorid und ein erstes organisches Lösungsmittel zuerst mit Chlorwasserstoffgas und anschließend Phosphorpentafluorid-Gas in Kontakt gebracht wird.

In einer weiteren alternativen Ausführungsform ist die Bezeichnung Gas enthaltend Phosphorpentafluorid und Chlorwasserstoff in Schritt a) so zu verstehen, dass die Suspension enthaltend Lithiumfluorid und erstes organisches Lösungsmittel zuerst mit Phosphorpentafluorid-Gas und anschließend mit Chlorwasserstoffgas in Kontakt gebracht.

Der Reaktionsdruck in Schritt a) beträgt beispielsweise 500 hPa bis 5 MPa, vorzugsweise 900 hPa bis 1 MPa und besonders bevorzugt 0,1 MPa bis 0,5 MPa.

Die Reaktionstemperatur in Schritt a) beträgt beispielsweise -60°C bis 150°C, bevorzugt zwischen 20 bis 150°C und ganz besonders bevorzugt zwischen -10°C und 20°C oder zwischen 50 und 120°C. Bei Temperaturen von über 120°C ist es bevorzugt unter einem Druck von mindestens 1500 hPa zu arbeiten.

Die Reaktionszeit in Schritt a) beträgt beispielsweise 10 Sekunden bis 24 Stunden, bevorzugt 5 Minuten bis 10 Stunden.

Bei Einsatz eines Gases enthaltend Phosphorpentafluorid und Chlorwasserstoff wird das das Reaktionsgefäß verlassende Gas in einer wässrigen Lösung von Alkalihydroxid, bevorzugt einer wässrigen Lösung von Kaliumhydroxid, besonders bevorzugt in einer 5 bis 30 gew.-%igen, ganz besonders bevorzugt in einer 10 bis 20 gew.-%igen, insbesondere bevorzugt in einer 15 gew.-%igen Lösung von Kaliumhydroxid in Wasser aufgefangen.

Vorzugsweise erfolgt die Herstellung des in Schritt a) eingesetzten Gases oder Gasgemisches in der Gasphase. Die dafür einzusetzenden Reaktoren, bevorzugt Rohrreaktoren, insbesondere Edelstahlrohre, sowie die für die Synthese des Lithiumhexafluorophosphats einzusetzenden Reaktionsgefäße sind dem Fachmann bekannt und beispielsweise beschrieben im Lehrbuch der Technischen Chemie - Band 1, Chemische Reaktionstechnik, M. Baerns, H. Hofmann, A. Renken, Georg Thieme Verlag Stuttgart (1987), S. 249 - 256.

Das Inkontaktbringen gemäß Schritt a) kann beispielsweise dadurch erfolgen, dass das Gas enthaltend Phosphorpentafluorid und Chlorwasserstoff in die Suspension eingeleitet wird.

In einer alternativen Ausführungsform wird das Gas enthaltend Phosphorpentafluorid und Chlorwasserstoff über die Suspension enthaltend Lithiumfluorid und ein erstes organisches Lösungsmittel geleitet.

Die Temperatur beim Inkontaktbringen gemäß Schritt a) kann beispielsweise vom Gefrierpunkt bis zum Siedepunkt des eingesetzten wässrigen Mediums erfolgen, vorzugsweise 0 bis 100°C, besonders bevorzugt 10 bis 60°C und besonders bevorzugt 10 bis 35°C, insbesondere 16 bis 24°C.

Der Druck beim Inkontaktbringen gemäß Schritt a) kann beispielsweise 100 hPa bis 2 MPa betragen, 900 hPa bis 1200 hPa, insbesondere Umgebungsdruck ist besonders bevorzugt.

Das Inkontaktbringen gemäß Schritt a) kann beispielsweise kontinuierlich oder diskontinuierlich erfolgen in jedem dem Fachmann für die Umsetzung von Flüssigkeiten mit Gasen bekannten Reaktionsgefäß, das vorzugsweise gegen Fluorwasserstoff resistent ist, wie beispielsweise solche aus Teflon.

In einer alternativen Ausführungsform wird das entstehende Reaktionsgemisch beispielsweise während dem Inkontaktbringen, alternativ während und nach dem Inkontaktbringen bzw. weiter alternativ nach dem Inkontaktbringen des Gases enthaltend Phosphorpentafluorid und Chlorwasserstoff mit Lithiumfluorid in einem ersten organischen Lösungsmittel gerührt. Das Inkontaktbringen kann erleichtert werden durch Einbringen von Mischenergie z.B. durch statische oder nicht-statische Mischelementen.

Das hergestellte Reaktionsgemisch, enthaltend Lithiumhexafluorophosphat, ein erstes organisches Lösungsmittel und Chlorwasserstoff, wird beispielsweise für eine Dauer von 10 Sekunden bis 24 Stunden, vorzugsweise 5 Minuten bis 12 Stunden, besonders bevorzugt 10 Minuten bis 4 Stunden und ganz besonders bevorzugt 30 Minuten bis 2 Stunden gerührt und danach, vorzugsweise über einen Filter mit einer Porengröße von 50 nm, filtriert.

Das erfindungsgemäße weitere organische Lösungsmittel ist dadurch gekennzeichnet, dass im weiteren organischen Lösungsmittel Lithiumhexafluorophosphat eine geringere Löslichkeit als im ersten organischen Lösungsmittel.

Dem Fachmann ist klar dass das Lösungsverhalten von der Temperatur abhängt, insofern ist oben genanntes Erfordernis für die gewählte Temperatur im Schritt b) zu erfüllen.

Die Temperatur beim Inkontaktbringen kann beispiels- und vorzugsweise vom Gefrierpunkt bis zum Siedepunkt des eingesetzten organischen Lösungsmittels oder seiner niedrigstsiedenden Komponente erfolgen, beispielsweise von -45 bis 80°C, besonders bevorzugt von 10 bis 60°C und besonders bevorzugt von 10 bis 35°C, insbesondere von 16 bis 24°C.

Der Druck beim Inkontaktbringen kann beispielsweise von 100 hPa bis 2 MPa betragen, bevorzugt von 900 hPa bis 1200 hPa, Umgebungsdruck ist besonders bevorzugt.

Als weiteres organisches Lösungsmittel bevorzugt ist Toluol.

Die Löslichkeit von Lithiumhexafluorophosphat in ersten organischen Lösungsmittel und im weiteren organischen Lösungsmittel als solches kann durch einige wenige Vorversuche ermittelt werden.

Das erfindungsgemäße erste organische Lösungsmittel und das weitere organische Lösungsmittel werden vor ihrer Nutzung bevorzugt einem Trocknungsprozess unterzogen, besonders bevorzugt einem Trocknungsprozess über einem Molekularsieb.

Der Gehalt an Verunreinigungen, insbesondere Wasser, des erfindungsgemäßen ersten organischen Lösungsmittels und des weiteren organischen Lösungsmittels sollte möglichst gering sein. In einer Ausführungsform beträgt er von 0 bis 500 ppm, vorzugsweise von 0 bis 200 ppm, besonders bevorzugt von 0 bis 100 ppm und ganz besonders bevorzugt 1 ppm oder weniger.

Das Inkontaktbringen des weiteren organischen Lösungsmittels mit dem Reaktionsgemisch aus Schritt a) kann beispielsweise derart erfolgen, dass zum vorgelegten weiteren organischen Lösungsmittel das Reaktionsgemisch enthaltend Lithiumhexafluorophosphat, ein erstes organisches Lösungsmittel und Chlorwasserstoff zudosiert wird.

Ebenso ist jede andere Reihenfolge des Inkontaktbringens von weiteren organischen Lösungsmittels mit dem Reaktionsgemisch aus Schritt a) grundsätzlich geeignet.

In einer alternativen Ausführungsform kann das Inkontaktbringen beispielsweise derart erfolgen, dass das Reaktionsgemisch aus Schritt a) vorgelegt wird und weiteres organisches Lösungsmittel zudosiert wird.

Das Inkontaktbringen des weiteren organischen Lösungsmittels mit dem Reaktionsgemisch aus Schritt a) kann beispielsweise kontinuierlich, beispielsweise durch Einleiten des weiteren organischen Lösungsmittels oder diskontinuierlich, beispielsweise durch portionsweise Zugabe, bevorzugt durch Zutropfen erfolgen. Für das Inkontaktbringen ist jedes, dem Fachmann für das Inkontaktbringen von Lösungen bekannten Behälter, geeignet. Das Inkontaktbringen kann erleichtert werden durch Einbringen von Mischenergie zum Beispiel durch statische oder nicht-statische Mischelementen.

Die Temperatur gemäß Schritt b) kann beispiels- und vorzugsweise vom Gefrierpunkt bis zum Siedepunkt des eingesetzten organischen Lösungsmittels oder seiner niedrigstsiedenden Komponente, beispielsweise von -45 bis 80°C, besonders bevorzugt von 10 bis 60°C und besonders bevorzugt von 10 bis 35°C, insbesondere von 16 bis 24°C betragen.

Der Druck beim Inkontaktbringen gemäß Schritt b) kann beispielsweise von 100 hPa bis 2 MPa betragen, bevorzugt von 900 hPa bis 1200 hPa, Umgebungsdruck ist besonders bevorzugt.

Vorzugsweise erfolgt das Inkontaktbringen des weiteren organischen Lösungsmittels mit dem Reaktionsgemisch aus Schritt a) über einen Zeitraum von einer Sekunde bis 48 Stunden, bevorzugt von 10 Sekunden bis 2 Stunden, besonders bevorzugt von 30 Sekunden bis 45 Minuten und ganz besonders bevorzugt von 1 Minute bis 30 Minuten.

In einer alternativen Ausführungsform kann nach Schritt b) eine Durchmischung durch Einbringen von Mischenergie z.B. durch statische oder nicht-statische Mischelementen stattfinden.

In einer alternativen Ausführungsform wird das Gemisch, enthaltend Lithiumhexafluorophosphat, ein erstes organisches Lösungsmittel und ein weiteres organisches Lösungsmittel beispielsweise für eine Dauer von 10 Sekunden bis 24 Stunden, vorzugsweise 1 Minuten bis 12 Stunden, besonders bevorzugt 5 Minuten bis 2 Stunden und ganz besonders bevorzugt 10 Minuten bis 1 Stunden gerührt.

Das Inkontaktbringen gemäß Schritt b) führt zu einer Fällung des Lithiumhexafluorophosphats.

In einer weiteren Ausführungsform kann nach Schritt b) ein weiteres Inkontaktbringen mit weiterem organischen Lösungsmittel oder anderen organischen Lösungsmitteln erfolgen. Dies hat den Zweck, dass neben der Trocknung auch ein weiterer Lösungsmitteltausch erfolgen kann.

Das Abtrennen des ausgefallenen Lithiumhexafluorophosphats kann durch jedes Verfahren erfolgen, das dem Fachmann für die Trennung von Feststoffen und Flüssigkeiten bekannt ist. Beispielsweise kann das Abtrennen erfolgen durch Sedimentation, Zentrifugation oder Filtration, beispielsweise durch Druckfiltration oder Abnutschen. Das Abtrennen kann beispielsweise erfolgen durch Verwendung eines Papierfilters, Polymerfilters, einer Glasfritte oder einer Keramikfritte, bevorzugt durch einen Teflonfilter, insbesondere durch einen Filter mit definierter Porengröße, beispielsweise eines Filters mit einer Porengröße von <5 µm, bevorzugt <1 µm, besonders bevorzugt <200 nm.

In einer alternativen Ausführungsform kann das, beispielsweise abgetrennte, feste Lithiumhexafluorophosphat unter Inertgas, bevorzugt Argon, getrocknet werden.

Erfolgt das Abtrennen in einer alternativen Ausführungsform teilweise, so ist die Einstellung eines spezifischen Gehaltes an Lithiumhexafluorophosphat möglich. Erfolgt sie weitestgehend vollständig kann hochreines Lithiumhexafluorophosphat als Feststoff erhalten werden. Weitestgehend vollständig heißt hier, dass der verbleibende Gehalt an organischem Lösungsmittel 5000 ppm oder weniger, vorzugsweise 2000 ppm oder weniger beträgt.

In einer alternativen Ausführungsform wird beispielsweise das erfindungsgemäß hergestellte Lithiumhexafluorophosphat in einem ersten organischen Lösungsmittel gelöst. Das Lösen erfolgt beispielsweise bei einer Temperatur von -45°C bis Raumtemperatur, bevorzugt bei einer Temperatur von -10 bis 10°C und besonders bevorzugt bei einer Temperatur von -5 bis 5°C. Diese Lösung wird mit weiterem organischen Lösungsmittel in Kontakt gebracht. Dies kann beispielsweise dadurch erfolgen, dass die Lösung aus Lithiumhexafluorophosphat in einem ersten organischen Lösungsmittel vorgelegt wird und weiterem organischen Lösungsmittel hinzugegeben wird. In einer alternativen Ausführungsform kann das weitere organische Lösungsmittel vorgelegt werden und die Lösung aus Lithiumhexafluorophosphat in einem ersten organischen Lösungsmittel hinzugegeben werden. Dabei fällt, wie bereits zuvor beschrieben, Lithiumhexafluorophosphat als Feststoff aus. Der ausgefallene Feststoff kann mit den zuvor beschrieben Trennungsmethoden von den ersten organischen Lösungsmitteln und den weiteren organischen Lösungsmitteln abgetrennt werden. Bevorzugt ist die Verwendung einer Teflon-Umkehrfritte zum Abtrennen des festen Lithiumhexafluorophosphat.

Dieses, als Umkristallisation bezeichnete Verfahren kann beliebig oft bevorzugt ein- bis dreimal wiederholt werden.

Das feste Lithiumhexafluorophosphat kann in einer alternativen Ausführungsform mit organischem Lösungsmittel, vorzugsweise dem oben beschriebenen weiteren organischen Lösungsmittel gewaschen werden.

Überraschenderweise enthält das Reaktionsprodukt Lithiumhexafluorophosphat trotz der hohen Konzentrationen an Chlorwasserstoff in Schritt a) nach Beendigung von Schritt c) nur noch geringe Mengen Chlorid. Ohne sich in irgendeiner Form wissenschaftlich festlegen zu wollen mutmaßt der Anmelder, dass die Chloride im ersten organischen Lösungsmittel zurückbleiben. Lithiumhexafluorophosphat ist im weiteren organischen Lösungsmittel schlechter löslich und fällt daher aus.

Erfindungsgemäß hergestelltes Lithiumhexafluorophosphat weist typischerweise einen Gehalt an Verunreinigungen von 0 bis 10.000 ppm, vorzugsweise 0 bis 5.000 ppm, besonders bevorzugt 0 bis 1.000 auf und ganz besonders bevorzugt 0 bis 100 ppm auf.

Als typische Verunreinigungen seien beispielsweise hydrolytische Zersetzungsprodukte, insbesondere Lithiumdifluorophosphat, Säuren, sowie Metallkationen, insbesondere Calcium, Chrom, Eisen, Magnesium, Molybdän, Cobalt, Nickel, Cadmium, Blei, Kalium oder Natrium und Fremdanionen, insbesondere Sulfat, Hydroxid, Hydrogencarbonat und Carbonat genannt.

In einer alternativen Ausführungsform können Verunreinigungen, beispielsweise Säuren durch Zugabe von basischen Substanzen, beispielsweise einer Base ausgewählt aus der Gruppe bestehend aus Erdalkalihydroxyden, Erdalkalihydrogencarbonaten, Erdalkalicarbonaten, Lithiumhydroxyd, Lithiumhydrogencarbonat und Lithiumcarbonat in Kontakt gebracht und neutralisiert werden.

Erfindungsgemäß hergestelltes Lithiumhexafluorophosphat weist typischerweise einen Chlorid-Gehalt 0 bis 100 ppm, bevorzugt 0 bis 50 ppm, besonders bevorzugt 0 bis 5 ppm und ganz besonders bevorzugt 0 bis 1 ppm auf.

Der Chlorid-Gehalt wird wie in den Beispielen angegeben ermittelt.

Aufgrund des geringen Chlorid-Gehalts kann das erfindungsgemäß hergestellte Lithiumhexaflurophosphat beispielsweise zu für elektrochemische Speichervorrichtungen geeigneten Elektrolyten weiterverarbeitet werden.

Die Erfindung betrifft weiterhin die Verwendung des erfindungsgemäß hergestellten Lithiumhexafluorophosphats als oder zur Herstellung von Elektrolyten für Lithiumakkumulatoren.

Elektrolyte können nach an sich allgemein bekannten Verfahren durch Inkontaktbringen von Lithiumhexafluorophosphat mit organischem Lösungsmittel und gegebenenfalls Additiven hergestellt werden.

Die Erfindung betrifft weiterhin ein Verfahren zur Herstellung von Elektrolyten für Lithiumakkumulatoren dadurch gekennzeichnet, dass das eingesetzte Lithiumhexafluorophosphat nach einem Verfahren umfassend zumindest die Schritte a) bis c) und gegebenenfalls d) des erfindungsgemäßen Verfahrens umfasst.

Die nach dem erfindungsgemäßen Verfahren hergestellten Elektrolyte können weitere Leitsalze wie beispielsweise Lithiumfluorsulfonylimid enthalten.

Der Vorteil der Erfindung liegt insbesondere in der effizienten Verfahrensweise und in der geringen Menge an Chlorid im erfindungsgemäß hergestellten Lithiumhexafluorophosphat.

### Beispiele

Im Folgenden sind unter der Angabe "%" immer Gew.-% und unter "ppm" immer "Gew.-ppm" zu verstehen.

"Unter Inertgasbedingung", oder Inertgas bedeutet, dass der Wasser- und der Sauerstoffgehalt der Atmosphäre unterhalb von 1 ppm liegt.

### Bestimmung des Chlorid und Hexafluorophosphat-Gehalts:

In Bezug auf die im Rahmen der vorliegenden Arbeiten verwendete Ionenchromatographie sei auf die Publikation L. Terborg, S. Nowak, S. Passerini, M. Winter, U. Karst, P.R. Haddad, P.N. Nesterenko, Ion chromatographic determination of hydrolysis products of hexafluorophosphate salts in aqueous solution. Analytica Chimica Acta 714 (2012) 121-126 sowie die darin zitierte Literatur verwiesen.

Die Analytik auf vorliegende Chlorid- und Hexafluorophosphat-Ionen wurde per Ionenchromatographie durchgeführt. Dazu werden folgende Geräte und Einstellungen verwendet:

| | |
|---|---|
| Gerätetyp: | Dionex ICS 2100 |
| Säule: | IonPac® AS20 2*250-mm "Analytical Column with guard" |
| Probenvolumen: | 1 µl |
| Eluent: | KOH Gradient: 0 min/15 mM, 10 min/15 mM, 13 min/80 mM, 27 min/100 mM, 27,1 min/15 mM, 34 min/15 mM |
| Eluent Fließrate: | 0,25 ml/min |
| Temperatur: | 30°C |
| Self-Regenerating Suppressor: | ASRS® 300 (2-mm) |

| | |
|---|---|
| Die Nachweisgrenze für Chlorid-Ionen liegt bei 1 ppm. | |

### Bestimmung der Gesamtsäure als Fluorwasserstoff:

In Bezug auf die im Rahmen der vorliegenden Arbeiten angewendete Bestimmung der Gesamtsäure sei auf die Publikation M. Schmidt, U. Heider, A. Kuehner, R. Oesten, M. Jungnitz, N. Ignat'ev, P. Sartori, Lithium fluoroalkylphosphates: a new class of conducting salts for electrolytes for high energy lithium-ion batteries. Journal of Power Sources 97-98 (2001) 557-560 sowie die darin zitierte Literatur verwiesen. Für die Bestimmung der Gesamtsäure wurden 1,79 g des Elektrolyt-Feststoffes in 13,21 g eines Gemisches von Ethylencarbonat und Dimethylcarbonat (Gewichtsverhältnis 1:1) unter Kühlung gelöst. Ein Teil der Lösung wurde gemäß der oben zitierten Literaturstelle zur Bestimmung der Gesamtsäure titriert. In einem Glasgefäß wurden unter inerten Bedingungen 0,2 ml Indikatorlösung (50 mg Bromthymolblau in 50 ml wasserfreiem Isopropanol) mit einer 0,01 N Tetrabutylammoniumhydroxidlösung (in wasserfreiem Isopropanol) bis zum Farbumschlag nach blaugrün titriert. Anschließend wurden ca. 1.000 mg Elektrolytlösung auf 0,1 mg genau eingewogen. Es wurde mit 0,01 N Tetrabutylammoniumhydroxidlösung abermals bis zum blaugrünen Farbumschlag titriert, und der Verbrauch an Tetrabutylammoniumhydroxidlösung auf 0,1 mg genau ausgewogen.

### Bestimmung des Wassergehalts:

Wassergehalte wurden, sofern nicht anders angegeben nach dem Verfahren nach Karl-Fischer bestimmt, welches dem Fachmann bekannt ist und zum Beispiel in P. Bruttel, R. Schlink, "Wasserbestimmung durch Karl-Fischer-Titration", Metrohm Monographie 8.026.5001, 2003-06. beschrieben wird.

### Photometrische Bestimmung von Metall-Gehalten (Eisen, Nickel, Blei, Cadmium):

Metallgehalte wurden mittels eines photometrischen Schnelltests der Firma Merck (Spectroquant® Küvettentest) bestimmt. Als Photometer wurde ein Spectroquant Pharo 100 M (Merck) verwendet.

Die Nachweisgrenze für Eisen liegt bei 1,3 ppm.

Die Nachweisgrenze für Nickel liegt bei 2,6 ppm.

Die Nachweisgrenze für Blei liegt bei 2,6 ppm.

Die Nachweisgrenze für Cadmium liegt bei 0,6 ppm.

### Phosphorpentafluorid:

Die Beispiele 1 bis 4 wurden mit kommerziell erhältlichem Phosphorpentafluorid (99%; abcr GmbH, CAS 7647-19-0) durchgeführt.

Das Phosphorpentafluorid der Beispiele 5 und 6 wurde wie folgt hergestellt:
Stufe 1: PCl₃ + 3 HF → PF₃ + 3 HCl
   Umsetzung von Phosphortrichlorid mit Fluorwasserstoff zu Phosphortrifluorid und Chlorwasserstoff
Stufe 2: PF₃ + Cl₂ → PCl₂F₃
   Umsetzung von Phosphortrifluorid mit elementarem Chlor zu Phosphordichloridtrifluorid
Stufe 3: PCl₂F₃ + 2 HF → PF₅ + 2 HCl
   Umsetzung von Phosphordichloridtrifluorid mit Fluorwasserstoff zu Phosphorpentafluorid und Chlorwasserstoff
Summe: PCl₃ + 5 HF + Cl₂ → PF5 + 5 HCl

### Experimentelle PF₅-Herstellung:

Durch ein auf 280°C beheiztes, ca. 6 m langes Reaktorrohr wurde eine Mischung aus 20 g/h Fluorwasserstoff und 11,4 ml/h Phosphortrichlorid (beides gasförmig) geleitet. Diese Reaktionsmischung wurde auf Raumtemperatur abgekühlt, 6,5 l/h Chlor eingeleitet und durch ein weiteres, ca. 6 m langes Reaktorrohr bei Raumtemperatur geleitet.

### Allgemeine Herstellungsbedingungen:

Sofern nicht anders angegeben wurden alle Arbeiten unter Argon Schutzgas durchgeführt. Acetonitril (Fluka, Trace Select ≥99.9%), Toluol (Azelis, techn, Qualität, getrocknet über P₂O₅ und destilliert) und Lithiumfluorid (Sigma-Aldrich, 99,995%) wurden von Sigma-Aldrich bezogen. Der Wassergehalt der verwendeten organischen Lösungsmittel lag unter 50 ppm. Zum Teil werden Arbeiten in einer Glovebox (Mbraun unilab) durchgeführt, wobei Sauerstoff und Wassergehalt in der Atmosphäre unter 0,1 ppm lagen.

### Beispiel 1: Herstellung von Lithiumhexafluorophosphat in Acetonitril (gesättigt)

In einer mit Argon gefüllten 500 ml Teflon-Apparatur wurden 250 ml Acetonitril und 25,61 g Lithiumfluorid bei Raumtemperatur vorgelegt. In die entstandene Suspension wurden zunächst 180 g Chlorwasserstoff-Gas und anschließend 186,58 g gasförmiges Phosphorpentafluorid eingeleitet. Das erhaltene Reaktionsgemisch wurde für eine Stunde gerührt. Das Reaktionsgemisch wurde filtriert und der erhaltene Feststoff im Argonstrom trockengeblasen. Es wurden 153 g Feststoff (44 % Ausbeute) erhalten.

| **Charakterisierung des Feststoffes:** | |
|---|---|
| **Chlorid-Gehalt:** | Unterhalb der Nachweisgrenze |
| **Lithiumhexafluorophosphat:** | 42,7 Gew.-% |

### Beispiel 2: Herstellung von Lithiumhexafluorophosphat in Acetonitril und anschließende Ausfällung mit Toluol

In einer mit Argon gefüllten 500 ml Teflon-Apparatur wurden 250 ml Acetonitril und 6,49 g Lithiumfluorid bei Raumtemperatur vorgelegt. In die entstandene Suspension wurden zunächst 27,35 g Chlorwasserstoff-Gas (Chlorid-Gehalt der Suspension nach Einleitung: 12,1 Gew.-%) und anschließend 47,24 g gasförmiges Phosphorpentafluorid eingeleitet. Das erhaltene Reaktionsgemisch wurde für eine Stunde gerührt. Das Reaktionsgemisch wurde in 500 ml Toluol eindosiert. Der ausgefallene Feststoff wurde abfiltriert und im Argonstrom trockengeblasen. Es wurden 34,7 g Feststoff (91% Ausbeute) erhalten.

| **Charakterisierung des Feststoffes:** | |
|---|---|
| **Chlorid-Gehalt:** | Unterhalb der Nachweisgrenze |
| **Lithiumhexafluorophosphat:** | 68,5 Gew.-% |

### Beispiel 3: Herstellung von Lithiumhexafluorophosphat in Acetonitril und anschließende Ausfällung mit Toluol

In einer mit Argon gefüllten 500 ml Teflon-Apparatur wurden 250 ml Acetonitril und 6,49 g Lithiumfluorid bei Raumtemperatur vorgelegt. In die entstandene Suspension wurden zunächst 27,35 g Chlorwasserstoff-Gas (Chlorid-Gehalt in der Suspension nach Einleitung: 12,1 Gew.-%) und anschließend 47,24 g gasförmiges Phosphorpentafluorid eingeleitet. Das erhaltene Reaktionsgemisch wurde für eine Stunde gerührt. Das Reaktionsgemisch wurde in 1000 ml Toluol eindosiert und 15 Minuten gerührt. Der ausgefallene Feststoff wurde abfiltriert und im Argonstrom trockengeblasen. Es wurden 29,1 g Feststoff (77 % Ausbeute) erhalten.

| **Charakterisierung des Feststoffes:** | |
|---|---|
| **Chlorid-Gehalt:** | Unterhalb der Nachweisgrenze |
| **Lithiumhexafluorophosphat:** | 99,0 Gew.-% |

### Beispiel 4: Herstellung von Lithiumhexafluorophosphat in Acetonitril und anschließende Ausfällung mit Toluol und Umkristallisation

In einer mit Argon gefüllten 500 ml Teflon-Apparatur wurden 250 ml Acetonitril und 6,49 g Lithiumfluorid bei Raumtemperatur vorgelegt. In die entstandene Suspension wurden zunächst 27,35 g Chlorwasserstoff-Gas (Chlorid-Gehalt der Suspension nach Einleitung: 12,1 %) und anschließend 47,24 g gasförmiges Phosphorpentafluorid eingeleitet. Das erhaltene Reaktionsgemisch wurde für eine Stunde gerührt. Das Reaktionsgemisch wurde in 500 ml Toluol eindosiert und 15 Minuten gerührt. Der ausgefallene Feststoff wurde abfiltriert und im Argonstrom trockengeblasen. Es wurden 29,5 g Feststoff (79 % Ausbeute) erhalten.

| **Charakterisierung des Feststoffes:** | |
|---|---|
| **Chlorid-Gehalt:** | Unterhalb der Nachweisgrenze |
| **Lithiumhexafluorophosphat:** | 97,9 Gew.-% |

### Umkristallisation:

In der Glovebox wurden 20 g des erhaltenen Feststoffs in 88 g Acetonitril bei 0°C gelöst. Die erhaltene Lösung wurde mit 352 g Toluol versetzt. Der ausgefallene Feststoff wurde sofort über eine Teflon-Umkehrfritte abfiltriert, mit 50 ml Toluol gewaschen, durch Ausblasen mit Argon getrocknet. Es wurden 14,75 g Feststoff erhalten.

| **Charakterisierung des Feststoffes:** | |
|---|---|
| **Chlorid-Gehalt:** | Unterhalb der Nachweisgrenze |
| **Lithiumhexafluorophosphat:** | 98,0 Gew.-% |

### Beispiel 5: Herstellung von Lithiumhexafluorophosphat in Acetonitril und anschließende Ausfällung mit Toluol und Umkristallisation

In einer mit Argon gefüllten 500 ml Teflon-Apparatur ohne vorgeschalteter Kühlfalle wurden 250 ml Acetonitril und 6,49 g Lithiumfluorid bei Raumtemperatur vorgelegt. In die entstandene Suspension wurde, gemäß der oben genannten Erzeugungsweise hergestelltes, gasförmiges Phosphorpentafluorid/Chlorwasserstoff-Gemisch (PF₅/HCl) eingeleitet, bis nominell 1 Äquivalent Phosphorpentafluorid (berechnet aus dem Verbrauch an PCl₃; 20 ml Verbrauch) enthalten war. Das erhaltene Reaktionsgemisch wurde für eine Stunde gerührt. Das Reaktionsgemisch wurde in 500 ml Toluol eindosiert und 15 Minuten gerührt. Der ausgefallene Feststoff wurde abfiltriert und im Argonstrom trockengeblasen. Es wurden 30,3 g Feststoff (79 % Ausbeute) erhalten.

| **Charakterisierung des Feststoffes:** | |
|---|---|
| **Chlorid-Gehalt:** | 28 ppm |
| **Lithiumhexafluorophosphat:** | 99,0 Gew.-% |

Aus dem Feststoff wurde eine Lösung (11,8 Gew.-% Lithiumhexafluorophosphat) in Dimethylcarbonat/Ethylencarbonat (DMC/EC) hergestellt.

| **Charakterisierung der Lösung:** | |
|---|---|
| **Gesamtsäure:** | 19,1 ppm |
| **Eisen:** | Unterhalb der Nachweisgrenze von 1,3 ppm |
| **Nickel:** | Unterhalb der Nachweisgrenze von 2,6 ppm |
| **Blei:** | Unterhalb der Nachweisgrenze von 2,6 ppm |
| **Cadmium:** | Unterhalb der Nachweisgrenze von 0,6 ppm |
| **Wassergehalt:** | 1,1 ppm |

### Umkristallisation:

In der Glovebox wurden 15 g des erhaltenen Feststoffes in 66 g Acetonitril bei 0°C gelöst. Die erhaltene Lösung wurde mit 264 g Toluol versetzt. Der ausgefallene Feststoff wurde sofort über eine Teflon-Umkehrfritte abfiltriert, mit 50 g Toluol gewaschen und im Argonstrom trockengeblasen. Es wurden 17,15 g Feststoff erhalten.

| **Charakterisierung des Feststoffes:** | |
|---|---|
| **Chlorid-Gehalt:** | Unterhalb der Nachweisgrenze |
| **Lithiumhexafluorophosphat:** | 80,0 Gew.-% |

### Beispiel 6: Herstellung von Lithiumhexafluorophosphat in Acetonitril und anschließende Ausfällung mit Toluol und Umkristallisation

In einer mit Argon gefüllten 500 ml Teflon-Apparatur mit vorgeschalteter Kühlfalle wurden 250 ml Acetonitril und 6,49 g Lithiumfluorid bei Raumtemperatur vorgelegt. In die entstandene Suspension wurde, gemäß der oben genannten Erzeugungsweise hergestelltes, gasförmiges Phosphorpentafluorid/Chlorwasserstoff-Gemisch (PF₅/HCl) eingeleitet, bis nominell 1 Äquivalent Phosphorpentafluorid (berechnet aus dem Verbrauch an PCl₃; 20 ml Verbrauch) enthalten war. Das erhaltene Reaktionsgemisch wurde für eine Stunde gerührt. Das Reaktionsgemisch wurde in 500 ml Toluol eindosiert und 15 Minuten gerührt und über Nacht stehen gelassen. Der ausgefallene Feststoff wurde abfiltriert und im Argonstrom trockengeblasen. Es wurden 48,0 g Feststoff (71 % Ausbeute) erhalten.

| **Charakterisierung des Feststoffes:** | |
|---|---|
| **Chlorid-Gehalt:** | Unterhalb der Nachweisgrenze |
| **Lithiumhexafluorophosphat:** | 56,3 Gew.-% |

### Umkristallisation:

In der Glovebox wurden 40 g des erhaltenen Feststoffes in 176 g Acetonitril bei 0°C gelöst. Die erhaltene Lösung wurde mit 704 g Toluol versetzt. Der ausgefallene Feststoff wurde sofort über eine Teflon-Umkehrfritte, mit 50 g Toluol gewaschen, und im Argonstrom trockengeblasen. Es wurden 16,9 g Feststoff erhalten.

| **Charakterisierung des Feststoffes:** | |
|---|---|
| **Chlorid-Gehalt:** | Unterhalb der Nachweisgrenze |
| **Lithiumhexafluorophosphat:** | 99,0 Gew.-% |

## Patentansprüche

1. Verfahren zur Herstellung von chloridarmem Lithiumhexafluorophosphat, umfassend zumindest die Schritte
a) Inkontaktbringen von Lithiumfluorid in einem ersten organischen Lösungsmittel enthaltend ein Nitril mit einem Gas enthaltend Phosphorpentafluorid und Chlorwasserstoff, wobei ein Reaktionsgemisch enthaltend Lithiumhexafluorophosphat, ein erstes organisches Lösungsmittel enthaltend ein Nitril und Chlorwasserstoff erhalten wird,
b) Inkontaktbringen des gemäß a) gebildeten Reaktionsgemischs mit weiterem organischen Lösungsmittel, das vom ersten organischen lösungsmittel verschieden ist, wobei Lithiumhexafluorophosphat ausfällt und
c) Abtrennen von ausgefallenem Lithiumhexafluorophosphat.

2. Verfahren nach Anspruch 1, **dadurch gekennzeichnet, dass** das in Schritt a) eingesetzte Lithiumfluorid einen Reinheitsgrad von 98,0000 bis 99,9999 Gew.-%, vorzugsweise 99,0000 bis 99,9999 Gew.-%, weiter bevorzugt 99,9000 bis 99,9995 Gew.-%, besonders bevorzugt 99,9500 bis 99,9995 Gew.-% und ganz besonders bevorzugt 99,9700 bis 99,9995 Gew.-% bezogen auf wasserfreies Produkt aufweist.

3. Verfahren nach Anspruch 1 oder 2, **dadurch gekennzeichnet, dass** als erstes organisches Lösungsmittel ein Nitril, eine Kombination aus Nitrilen oder eine Kombination aus zumindest einem Nitril mit zumindest einem organischen Lösungsmittel, das kein Nitril ist, bevorzugt Acetonitril verwendet wird.

4. Verfahren nach einem der Ansprüche 1 bis 3, **dadurch gekennzeichnet**, das das Inkontaktbringen von Lithiumfluorid und ein erstes organisches Lösungsmittel unter Inertgas, bevorzugt unter Argon, erfolgt.

5. Verfahren nach einem der Ansprüche 1 bis 4, **dadurch gekennzeichnet, dass** das in Schritt a) eingesetzte Gas enthaltend Phosphorpentafluorid und Chlorwasserstoff durch ein Verfahren hergestellt werden kann, das zumindest die folgenden Schritte umfasst:
1) Umsetzung von Phosphortrichlorid mit Fluorwasserstoff zu Phosphortrifluorid und Chlorwasserstoff
2) Umsetzung von Phosphortrifluorid mit elementarem Chlor zu Phosphordichlorid-trifluorid
3) Umsetzung von Phosphordichloridtrifluorid mit Fluorwasserstoff zu Phosphorpentafluorid und Chlorwasserstoff

6. Verfahren nach einem der Ansprüche 1 bis 5, **dadurch gekennzeichnet, dass** das Gas enthaltend Phosphorpentafluorid und Chlorwasserstoff ein Gasgemisch enthaltend 5 bis 41 Gew.-% Phosphorpentafluorid, 6 bis 59 Gew.-% Chlorwasserstoff und 0 bis 50 Gew.-% Fluorwasserstoff, vorzugsweise 20 bis 41 Gew.-% Phosphorpentafluorid, 40 bis 59 Gew.-% Chlorwasserstoff und 0 bis 40 Gew.-% Fluorwasserstoff, besonders bevorzugt 33 bis 41 Gew.-% Phosphorpentafluorid, 49 bis 59 Gew.-% Chlorwasserstoff und 0 bis 18 Gew.-% Fluorwasserstoff ist, wobei der Anteil von Phosphorpentafluorid, Chlorwasserstoff und Fluorwasserstoff beispielsweise 11 bis 100 Gew.-%, vorzugsweise 90 bis 100 Gew.-% und besonders bevorzugt 95 bis 100 Gew.-% beträgt.

7. Verfahren nach einem der Ansprüche 1 bis 6, **dadurch gekennzeichnet, dass** die Temperatur beim Inkontaktbringen gemäß Schritt a) vom Gefrierpunkt bis zum Siedepunkt des eingesetzten wässrigen Mediums, vorzugsweise 0 bis 100°C, besonders bevorzugt 10 bis 60°C und besonders bevorzugt 10 bis 35°C, insbesondere 16 bis 24°C beträgt.

8. Verfahren nach einem der Ansprüche 1 bis 7, **dadurch gekennzeichnet, dass** im erfindungsgemäßen, vom ersten organischen Lösungsmittel unterschiedlichen, weiteren organischen Lösungsmittel, bevorzugt Toluol, Lithiumhexafluorophosphat eine geringere Löslichkeit als im ersten organischen Lösungsmittel aufweist.

9. Verfahren nach einem der Ansprüche 1 bis 8, **dadurch gekennzeichnet, dass** weiteres organisches Lösungsmittel bevorzugt Toluol ist.

10. Verfahren nach einem der Ansprüche 1 bis 9, **dadurch gekennzeichnet, dass** das Inkontaktbringen des weiteren organischen Lösungsmittels mit dem Reaktionsgemisch enthaltend Lithiumhexafluorophosphat, ein erstes organisches Lösungsmittel und Chlorwasserstoff derart erfolgt, dass zum vorgelegten weiteren organischen Lösungsmittel das Reaktionsgemisch enthaltend Lithiumhexafluorophosphat, ein erstes organisches Lösungsmittel und Chlorwasserstoff zudosiert wird.

11. Verfahren nach einem der Ansprüche 1 bis 10, **dadurch gekennzeichnet, dass** erfindungsgemäß hergestelltes Lithiumhexafluorophosphat in einem weiteren Schritt
d) bei einer Temperatur von -45°C bis Raumtemperatur, bevorzugt bei einer Temperatur von -10 bis 10°C und besonders bevorzugt bei einer Temperatur von -5 bis 5°C in einem ersten organischen Lösungsmittel gelöst und in einem weiteren Schritt
e) mit weiterem organischen Lösungsmittel in Kontakt gebracht wird, wobei Lithiumhexafluorophosphat ausfällt und danach in einem Schritt
f) Lithiumhexafluorophosphat abgetrennt wird.

12. Verfahren nach einem der Ansprüche 1 bis 11, **dadurch gekennzeichnet, dass** das erfindungsgemäß hergestellte Lithiumhexafluorophosphat einen Chlorid-Gehalt von 0 bis 100 ppm, bevorzugt 0 bis 50 ppm, besonders bevorzugt 0 bis 5 ppm und ganz besonders bevorzugt 0 bis 1 ppm aufweist.

13. Lithiumhexafluorophosphat, **dadurch gekennzeichnet, dass** es einen Chlorid-Gehalt von 0 bis 28 ppm, bevorzugt von 0 bis 5 ppm und ganz besonders bevorzugt von 0 bis 1 ppm aufweist.

14. Verfahren zur Herstellung von Elektrolyten für Lithiumakkumulatoren **dadurch gekennzeichnet dass** es zumindest ein Verfahren der Ansprüche 1 bis 12 umfasst.

15. Verwendung von Lithiumhexafluorophosphat nach Anspruch 14 und deren Lösungen als oder zur Herstellung von Elektrolyten in Lithiumakkumulatoren.
